# EUROPEAN PATENT APPLICATION

(11) **EP 1 035 665 A1**
(43) Date of publication of application: **13.09.2000**
(21) Application number: 99104704.4
(22) Date of filing: 10.03.1999
(51) Int. Cl.: H04B 7/26

(54) **Method for the initial synchronization of a digital mobile radio system**

(71) Applicant: ROBERT BOSCH GMBH, 70442 Stuttgart (DE)
(72) Inventor: Brink, stig, DK- 9000 Aalborg (DK); Vejlgaard, Benny, DK - 9220 Aalborg, (DK)

(57) **Abstract**

The invention provides a method for initial synchronization of digital mobile systems, and particularly UTMS systems, wherein a mobile station having an adjustable oscillator means is synchronized to a base station comprising the following steps performed by the mobile station: acquiring a synchronization to a synchronization slot of an available base station; splitting the synchronization slot into subslots (SS1-SS4); determining the absolute phase value (D1-D4) in each sub-slot; determining the frequency offset of the oscillator means from the determined absolute phase values (D1-D4); and adjusting the frequency of the oscillator means in order to reduce the frequency offset below a predetermined threshold.

## Description

### BACKGROUND OF THE INVENTION

The present invention relates to a method for initial synchronization of digital mobile systems with large frequency errors, and particularly UTMS systems, wherein a mobile station having an adjustable oscillator means is synchronized to a base station.

Although applicable to any digital mobile system, the present invention and its underlying problems will be discussed with particular reference to UMTS mobile systems.

In general, when a mobile terminal is switched on, it is not synchronized to any base station. Therefore, the first action of the mobile station is to find a base station before any communications can take place. This procedure is referred to as initial cell search. During the initial cell search, the mobile station searches for the base station to which it has the lowest path loss.

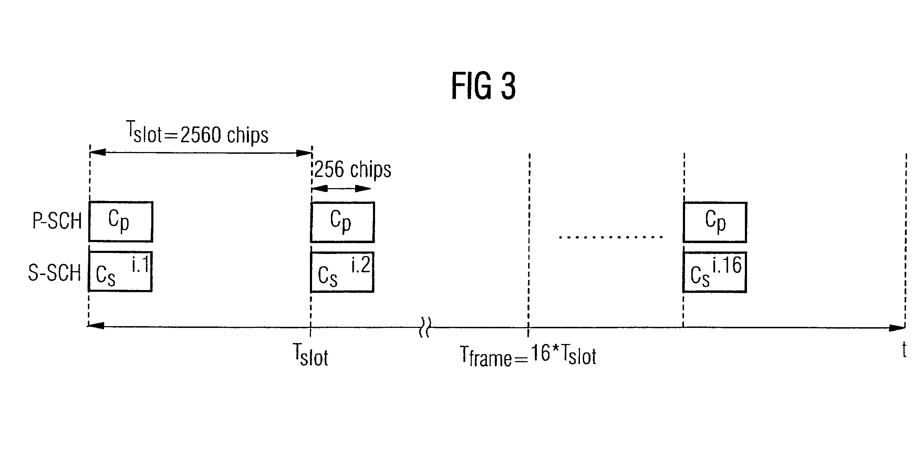

It then determines the downlink scrambling code and frame synchronization of that base station. The initial cell search uses the synchronization channel (SCH), as illustrated in Fig. 3.

In Fig. 3, t denotes the time in arbitrary units, P-SCH the primary synchronization channel, S-SCH the secondary synchronization channel, cp a primary synchronization code, cₛ^{i,k} one of 17 possible secondary synchronization codes wherein (cₛ^{i,1}, cₛ^{i,2} , ... , cₛ^{i,16}) encode cell specific long scrambling code group i, Tₛₗₒₜ the slot length, and T_{frame} the frame length.

The initial cell search is carried out in three steps.

During the first step of the initial cell search procedure, the mobile station uses the primary SCH P-SCH to acquire a slot synchronization to the strongest base station. This is done with a single matched filter matched to the primary synchronization code cₚ, which is common to all base stations.

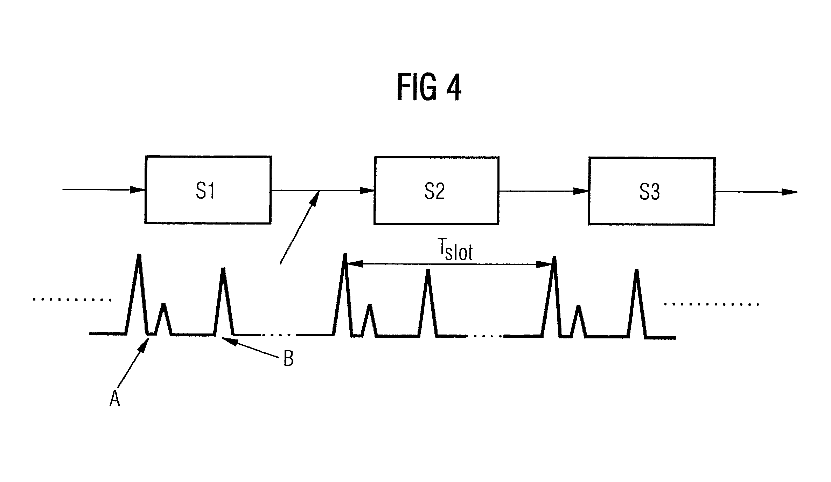

The output of the matched filter will have peaks for each ray of each base station within range of the mobile station, as shown in Fig. 4 which is a schematic illustration of the matched filter search for primary synchronization code to slot synchronization (timing modulo the slot length).

In Fig. 4, S1 denotes the matched filter search resulting in two rays from a first base station at A one ray from a second base station at B. S2 denotes the slotwise accumulation, and S3 denotes the maximum finding resulting in the timing modulo the slot length Tₛₗₒₜ.

Detecting the position of the strongest peak gives the timing of the strongest base station.

During the second step of the initial cell search procedure, the mobile station uses the secondary SCH S-SCH to find frame synchronization. This is done by correlating the received signal at the positions of the Secondary Synchronization Code S-SCH with all possible Secondary Synchronization Codes.

During the third and last step of the initial cell search procedure, the mobile station determines the exact scrambling code used by the found base station. The scrambling code is identified through symbol-by-symbol correlation over the Primary CCPCH with all scrambling codes within the code group identified in the second step.

After the scrambling code has been identified, the Primary CCPCH can be detected, super-frame synchronization can be acquired, and the system and cell specific BCCH information can be read.

The above three steps describe how initial synchronization is obtained in the current UMTS specifications, UMTS Terrestrial Radio Access Physical Layer description, version 0.4.

The above synchronization methods are described theoretically in Viterbi, Andrew J., Principles of Spread Spectrum Communications, Addison-Wesley Publishing Company, 1995, and Glisic, Savo and Branka Vucetic, Spread Spectrum CDMA Systems for Wireless Communications, Artech House Publishers, 1997.

A disadvantage of the above state of the art is that fact that there can arise synchronization problems for large frequency offsets between transmitter and receiver.

### SUMMARY OF THE INVENTION

The present invention provides a method according to claim 1 which allows to obtain initial synchronization even in the presence of large frequency offsets between the transmitter and the receiver.

Theretofore, the known synchronization method in the first step is modified by the post detection procedure and optionally by an integration procedure to be frequency offset insensitive. After the first above mentioned step, the frequency offset is measured and the oscillator frequency is corrected in order to reduce the frequency offset. When the frequency offset has been reduced below a certain threshold, the synchronization continues with the above mentioned second step.

Some of the advantages of using the initial cell search with freguency estimator are the possibility of synchronism with large frequency offset beLween the transmitter and the receiver allowing for a cheaper oscillator designs having larger frequency tolerances. It provides simple implementation architecture opposed to conventional methods. It is equally resistant to noise as the conventional synchroniser with low or no frequency offset.

Preferred embodiments of the present invention are listed in the dependent claims.

According to a preferred embodiment, a primary synchronization channel is used for acquiring the synchronization to a synchronization slot of an available base station. Preferably a single matched filter matched to a primary synchronization code (cₚ) which is common to all possible base stations is used.

According to a further preferred embodiment, the determined absolute phase values in each sub-slot are interpolated for determining the frequency offset of the oscillator means.

According to a further preferred embodiment, the determined frequency offset is integrated over several synchronization slots.

According to a further preferred embodiment, the frequency of the oscillator means is iteratively adjusted in order to reduce the frequency offset below a predetermined threshold.

According to a further preferred embodiment, after the step of adjusting the frequency, a secondary synchronization channel is used for finding frame synchronization by correlating the received signal at the positions of a secondary synchronization Code with all of a plurality of possible secondary synchronization codes.

According to a further preferred embodiment, after the step frame synchronization, the exact scrambling code used by the base station is determined through symbol-by-symbol correlation over the Primary CCPCH with all scrambling codes within the identified code group.

### BRIEF DESCRIPTION OF THE DRAWINGS

The present invention will become more fully understood by the following detailed description of preferred embodiments thereof in conjunction with the accompanying drawings, in which:
- Fig. 1: a schematic illustration of an embodiment of the method according to the present invention;
- Fig. 2: a graph showing the phase - time - relation in the embodiment of Fig. 1;
- Fig. 3: a schematic illustration of the structure of the synchronization channel; and
- Fig. 4: a schematic illustration of matched filter search for primary synchronization code to slot synchronization (timing modulo the slot length).

### DESCRIPTION OF THE PREFERRED EMBODIMENTS

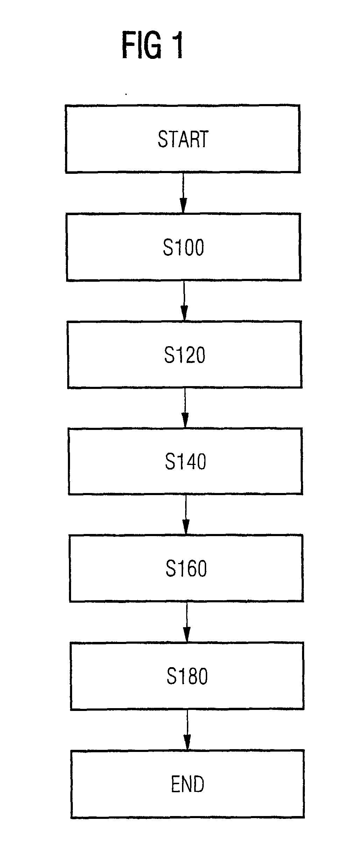

Fig. 1 is a schematic illustration of an embodiment of the method according to the present invention.

The first step (S100) is to acquire any form of slot synchronization to the network having synchronization slots in a conventional way in order to have a reference for the frequency offset.

In order to achieve slot synchronization during large initial frequency offsets, the primary synchronization code cₚ which is used for correlation in the receiver is divided into smaller sub-correlators. The number of sub-correlatros depends on the maximum expected frequency offset between the mobile station MS and the base station BS.

Thus, the synchronization slot which has a length of 256 chips in UMTS, is then divided into smaller sub-slots (S120), here four sub-slots SS1 - SS4 each having a length of 64 chips. By using four sub-slots the maximum acceptable frequency offset during the slot synchronization is four times higher than for the full synchronization slot which has a length of 256 chips.

The correlation is performed on each sub-slot SS1-SS4 and integrated after detection (S140). In other words, the outputs of the sub-correlators are combined and the detection of the strongest peak results in slot synchronization. This procedure is called the post detection integration procedure.

One can now use the found time position of the synchronization code as a time reference for determining the frequency offset. The output of the sub-correlators are expected to have their peak values at the time position of the synchronization code cₚ for every slot thereafter.

At the expected time position of the synchronization code cₚ the phase change of the four complex outputs of sub-correlators can be used for estimation of the frequency offset during the 256 chips synchronization code.

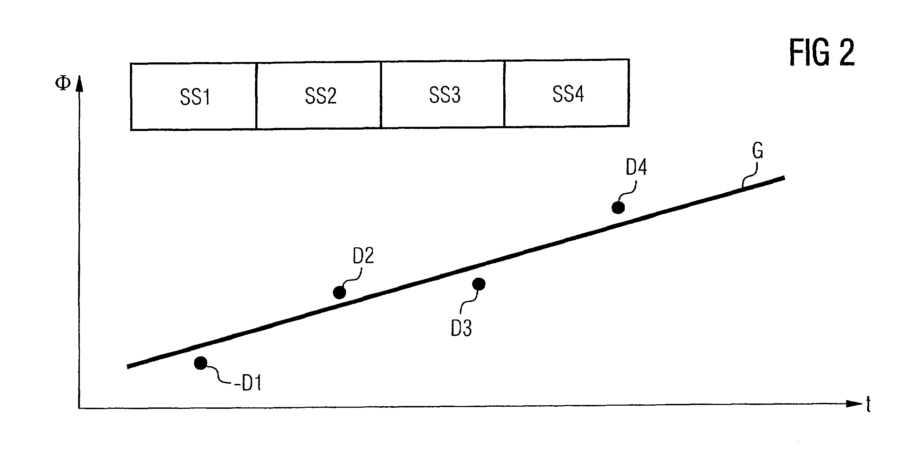

As an example of a calculation method of the frequncy offset, the average phase change between the four correlator outputs coulb be estimated by interpolating the absolute phases in each sub-slot (S160), as illustrated in Fig. 2 which is a graph showing the phase - time - relation in the embodiment of Fig. 1.

In Fig. 2, the slope of the line G fitted to the phase Φ measurement dots D1 - D4 corresponding the respective sub-slots SS1 - SS4 is proportional to the freqency offset. These values can optionally be integrated over several time slots in order to reduce the noise effect.

The frequency offset determined above is now used to correct the oscillator frequency of the mobile station (S180). When the frequency offset has decreased to an acceptable level (typically below a few kHz), the synchronization can continue with step 2 as described in the prior art.

The procedure of correcting the frequency is iterative and can be done several times before the frequency offset is at an acceptable level.

Although the present invention has been described with respect to preferred embodiments thereof, it should be understood that many modifications can be performed without departing from the scope of the invention as defined by the appended claims.

Particularly, the invention is also applicable to other than UTMS systems.

## Claims

1. A method for initial synchronization of digital mobile systems, and particularly UMTS systems, wherein a mobile station having an adjustable oscillator means is synchronized to a base station comprising the following steps performed by the mobile station:
acquiring a synchronization to a synchronization slot of an available base station;
splitting the synchronization slot into sub-slots (SS1-SS4);
determining the absolute phase value (D1-D4) in each sub-slot;
determining the frequency offset of the oscillator means from the determined absolute phase values (D1-D4); and
adjusting the frequency of the oscillator means in order to reduce the frequency offset below a predetermined threshold.

2. The method according to claim 1, comprising the step of using a primary synchronization channel (P-SCH) for acquiring the synchronization to a synchronization slot of an available base station, and preferably using a single matched filter matched to a primary synchronization code (cₚ) which is common to all possible base stations.

3. The method according to claim 1 or 2, comprising the step of interpolating the determined absolute phase values (D1-D4) in each sub-slot (SS1-SS4) for determining the frequency offset of the oscillator means.

4. The method according to one of the preceeding claims, comprising the step of integrating the determined frequency offset over several synchronization slots.

5. The method according to one of the preceeding claims, comprising the step of iteratively adjusting the frequency of the oscillator means in order to reduce the frequency offset below a predetermined threshold.

6. The method according to one of the preceeding claims, comprising the following step after the step of adjusting the frequency:
using a secondary synchronization channel (S-SCH) for finding frame synchronization by correlating the received signal at the positions of a secondary synchronization Code with all of a plurality of possible secondary synchronization codes.

7. The method according to one of the preceeding claims, comprising the following step after the step frame synchronization:
determining the exact scrambling code used by the base station through symbol-by-symbol correlation over the Primary CCPCH with all scrambling codes within the identified code group.
